# EUROPÄISCHE PATENTANMELDUNG

(11) **EP 4 691 748 A1**
(43) Veröffentlichungstag der Anmeldung: **11.02.2026**
(21) Anmeldenummer: 25194378.3
(22) Anmeldetag: 06.08.2025
(51) Int. Cl.: B30B 1/04, B30B 1/24, B30B 15/28, F16P 3/24

(54) **HANDBETÄTIGTE PRESSE**

(30) Priorität: 07.08.2024 DE 102024122566
(71) Anmelder: Gebr. Schmidt Fabrik für Feinmechanik GmbH & Co. KG, 78112 St. Georgen (DE)
(72) Erfinder: Meyer, Andreas, 78120 Furtwangen (DE)
(74) Vertreter: Witte, Weller & Partner Patentanwälte mbB

(57) **Zusammenfassung**

Handbetätigte Presse (10), aufweisend: ein Betätigungsorgan (18), dessen Betätigung in eine Hubbewegung eines Pressenstößels (24) umgesetzt wird; eine Welle (26), die mit dem Betätigungsorgan (18) derart bewegungsgekoppelt ist, dass die Welle (26) bei einer Betätigung des Betätigungsorgans (18) in einer ersten Drehrichtung (43) rotiert; und eine Hubfreigabeeinrichtung (42), die dazu eingerichtet ist, durch eine Hubfreigabebetätigung von einer Sperrstellung, in der die Hubfreigabeeinrichtung (42) die Hubbewegung sperrt, indem sie eine Rotation der Welle (26) in der ersten Drehrichtung (43) mechanisch blockiert, in eine Freigabestellung, in der die Hubfreigabeeinrichtung (42) die Hubbewegung freigibt, in dem sie eine Rotation der Welle (26) in der ersten Drehrichtung (43) mechanisch ermöglicht.

## Beschreibung

Die vorliegende Erfindung betrifft eine handbetätigte Presse. Insbesondere betrifft die vorliegende Erfindung eine handbetätigte Presse mit einem Pressenstößel und einem von Hand betätigten Betätigungsorgan, dessen Betätigung in eine Hubbewegung des Pressenstößels umgesetzt wird.

Derartige handbetätigte Pressen, welche auch als Handhebelpressen bezeichnet werden, werden für manuelle Montageprozesse aller Art eingesetzt. Solche handbetätigten Pressen können beispielsweise als Kniehebelpressen oder Zahnstangenpressen ausgeführt sein.

Bei Kniehebelpressen wird der Pressstößel mittels einer Kniehebelmechanik, welche durch ein meist als Betätigungshebel ausgeführtes Betätigungsorgan angetrieben wird, bewegt. Der Pressenstößel erfährt hierbei eine sinuide Bewegung. Mit zunehmendem Verstellwinkel des Betätigungshebels übt der Pressenstößel eine kleinere Wegstrecke aus. Befindet sich der Kniehebelmechanismus in der sogenannten "Streckstellung", ist der Hub des Pressenstößels voll ausgefahren. Kurz vor der Streckstellung des Kniehebels kann, bedingt durch die Kniehebelmechanik, eine große Kraft auf den Pressenstößel ausgeübt werden. Handbetätigte Pressen mit Kniehebelmechanik (Kniehebelpressen) eignen sich daher vorzugsweise für Pressprozesse, bei denen eine hohe Kraft auf kleiner Wegstrecke benötigt wird.

Bei Zahnstangenpressen wird der Pressenstößel über eine Stirnradwelle, die in eine Zahnstange oder eine in den Pressenstößel eingebrachte Verzahnung eingreift, angetrieben. Die Stirnradwelle ist meist mit dem Betätigungsorgan, welches auch hier in der Regel als Betätigungshebel ausgeführt ist, (dreh-)fest verbunden. Die Stirnradwelle kann einteilig oder mehrteilig (Welle, Welle-Nabe-Verbindung, Stirnrad) ausgebildet sein. Meist wird durch eine Verdrehsicherung eine Verdrehung des Pressenstößels über den gesamten Hub verhindert.

Bei Zahnstangenpressen wird der Stößel durch die Länge der an dem Stößel angebrachten Zahnstange bzw. die Länge der im Stößel integrierten Verzahnung sowie durch den Verstellwinkel des Betätigungshebels bestimmt. Bei gleichbleibender Krafteinwirkung auf den Betätigungshebel wird theoretisch die gleiche Presskraft über den gesamten Stößelhub ausgeübt. Handhebelpressen mit Zahnstange (Zahnstangenpressen) eignen sich daher vorzugsweise für Pressprozesse, bei denen eine kontinuierliche Kraft auf großer Wegstrecke benötigt wird.

Bei handbetätigten Pressen spielt, unabhängig davon, ob sie als Kniehebelpressen oder Zahnstangenpressen ausgebildet sind, das Thema Sicherheit des Bedieners eine große Rolle.

Beispielsweise muss sichergestellt werden, dass sich keine Hand des Bedieners während eines Pressvorgangs im Gefahrenbereich des Pressenstößels befindet. Dies wird bei handbetätigten Pressen häufig durch eine sog. "Hubfreigabeeinrichtung" gelöst.

Eine solche Hubfreigabeeinrichtung sorgt dafür, dass der Bediener mit seiner zweiten Hand eine zusätzliche Aktion ausführen muss, während er mit seiner ersten Hand das Betätigungsorgan betätigt, um die Hubbewegung des Pressenstößels zu veranlassen. Ohne diese zusätzliche Aktion mit der zweiten Hand verhindert die Hubfreigabeeinrichtung eine Freigabe der Hubbewegung (Hubfreigabe). Dementsprechend ist eine Hubbewegung lediglich möglich, solange die Hubfreigabeeinrichtung betätigt wird. Dieser Vorgang wird vorliegend als "Hubfreigabebetätigung" bezeichnet.

Durch diese Maßnahme wird die Gefahr vor Verletzungen (z.B. Quetschungen) des Bedieners erheblich gemindert.

Bisherige Lösungen solcher Hubfreigabeeinrichtungen basieren auf elektrischen, pneumatischen oder hydraulischen Funktionsprinzipien. Dies erfordert allerdings separate Anschlüsse (elektrische, pneumatische oder hydraulische Anschlüsse) an der Presse, was umständlich ist und einen autarken Einsatz der Presse nicht möglich macht.

Zudem erfüllen viele der bisher bekannten Lösungen die hohen Sicherheitsanforderungen nicht in erwünschtem Maße, da die von diesen ausgeübten Sperrkräfte nicht hoch genug sind und/oder sich eine Sperrung des Betätigungsorgans nicht in jeder beliebigen Position des Betätigungsorgans bzw. Pressenstößels gewährleisten lässt.

Vor diesem Hintergrund ist es eine Aufgabe der vorliegenden Erfindung, eine handbetätigte Presse bereitzustellen, die die oben genannten Nachteile überwindet. Hierbei ist es insbesondere eine Aufgabe der vorliegenden Erfindung, die Sicherheit des Bedieners auf möglichst einfache, kostengünstige und dennoch wirkungsvolle Art und Weise zu erhöhen.

Diese Aufgabe wird erfindungsgemäß durch eine handbetätigte Presse gelöst, welche Folgendes aufweist:
- ein Betätigungsorgan, dessen Betätigung in eine Hubbewegung eines Pressenstößels umgesetzt wird;
- eine Welle, die mit dem Betätigungsorgan derart bewegungsgekoppelt ist, dass die Welle bei einer Betätigung des Betätigungsorgans in einer ersten Drehrichtung rotiert; und
- eine Hubfreigabeeinrichtung, die dazu eingerichtet ist, durch eine Hubfreigabebetätigung von einer Sperrstellung, in der die Hubfreigabeeinrichtung die Hubbewegung sperrt, indem sie eine Rotation der Welle in der ersten Drehrichtung mechanisch blockiert, in eine Freigabestellung, in der die Hubfreigabeeinrichtung die Hubbewegung freigibt, in dem sie eine Rotation der Welle in der ersten Drehrichtung mechanisch ermöglicht.

Die vorliegende Erfindung basiert somit auf der Idee, eine mechanische Hubfreigabeeinrichtung einzusetzen, welche vorzugsweise unmittelbar auf eine sich während der Betätigung des Betätigungsorgans drehende Welle einwirkt. Hierdurch lässt sich eine kostengünstige Lösung realisieren, welche aufgrund der direkten Kraftübertragung auf die Welle für hohe Blockierkräfte und damit ein hohes Maß an Sicherheit sorgt.

Die mechanische Sperrung der Hubbewegung hat darüber hinaus den Vorteil, dass eine Betätigung des Betätigungsorgans auch ohne externe Energiezufuhr gesperrt ist. Dies macht einen autarken Einsatz der Presse möglich.

Zudem lässt sich die rein mechanische Hubfreigabeeinrichtung sehr platzsparend im Bereich der Welle anbringen.

Im Falle einer Zahnstangenpresse handelt es sich bei der Welle beispielsweise um die Stirnradwelle, welche drehfest mit dem Betätigungsorgan verbunden ist. Bei Kniehebelpressen hingegen handelt es sich bei der genannten Welle vorzugsweise um eine Lagerwelle der Kniehebelmechanik, welche bei einer Betätigung des Betätigungsorgans eine Rotation erfährt.

Die oben genannte Aufgabe ist somit vollständig gelöst.

Gemäß einer Ausgestaltung ist die Hubfreigabeeinrichtung dazu eingerichtet, ohne die Hubfreigabebetätigung in der Sperrstellung zu sein.

Mit anderen Worten befindet sich die Hubfreigabeeinrichtung automatisch in der Sperrstellung, in der die Hubfreigabeeinrichtung die Hubbewegung sperrt, solange die Hubfreigabeeinrichtung nicht betätigt wird.

Besonders bevorzugt wechselt die Hubfreigabeeinrichtung nach Beendigung der Hubfreigabebetätigung automatisch von der Freigabestellung zurück in die Sperrstellung.

Hierdurch ist ein Höchstmaß an Sicherheit gewährleistet, da gewährleistet ist, dass die Hubbewegung des Pressenstößels sofort gesperrt wird, wenn der Bediener der Presse die Hubfreigabeeinrichtung nicht mehr betätigt.

Gemäß einer weiteren Ausgestaltung weist die Hubfreigabeeinrichtung ein Federelement auf, welches der Hubfreigabebetätigung entgegenwirkt.

Das Federelement sorgt somit für eine automatische Rückstellung der Hubfreigabeeinrichtung in die Sperrstellung, was die Bedienung vereinfacht und die Sicherheit erhöht. Zudem sorgt das Federelement für ein haptisches Feedback für den Bediener während der Hubfreigabebetätigung.

Gemäß einer weiteren Ausgestaltung ist die Hubfreigabeeinrichtung zwischen der Sperrstellung und der Freigabestellung derart stufenlos schaltbar, dass sie ein Schalten zwischen der Sperrstellung und der Freigabestellung in jeder Winkelstellung entlang der ersten Drehrichtung stufenlos ermöglicht.

Hierdurch wird die Sicherheit weiter erhöht, da ein Sperren der Hubbewegung in jeder Stellung der Welle und damit auch in jeder Stellung des Pressenstößels möglich ist. Zudem erhöht dies auch den Bedienkomfort, da ein Bediener der Presse die Hubbewegung in jeder beliebigen Position (absichtlich oder unabsichtlich) freigeben oder sperren kann.

Es versteht sich, dass mit dem "Schalten" zwischen der Sperrstellung und der Freigabestellung im vorliegenden Sinne ein mechanisches Schalten zwischen den beiden Zuständen der Hubfreigabeeinrichtung gemeint ist.

Gemäß einer weiteren Ausgestaltung weist die Hubfreigabeeinrichtung ein Hubfreigabe-Betätigungselement zur Hubfreigabebetätigung auf, dessen Betätigung eine Rotation eines Teils der Hubfreigabeeinrichtung in einer der ersten Drehrichtung entgegengesetzten zweiten Drehrichtung bewirkt.

Eine Betätigung der Hubfreigabeeinrichtung (Hubfreigabebetätigung) durch eine entgegengesetzte Rotation zu der Betätigung des Betätigungsorgans hat im Wesentlichen ergonomische Vorteile und vereinfacht die Betätigung der Hubfreigabebetätigung durch intuitive Bewegungsabläufe, die dem natürlichen Bewegungsmuster der Hand entsprechen. Zudem wird damit die Hubfreigabebetätigung auf möglichst einfache und effiziente Art und Weise ermöglicht.

Gemäß einer weiteren Ausgestaltung weist die Hubfreigabeeinrichtung einen Freilaufmechanismus auf.

Die Verwendung eines solchen Freilaufmechanismus zur Gewährleistung der Funktion der Hubfreigabeeinrichtung hat diverse Vorteile: Auf diese Art und Weise wird die Hubfreigabe wie auch die Sperrung dieser auf mechanisch einfache Art und Weise mit wenigen Bauteilen bewirkt. Es handelt sich daher um eine sehr kostengünstige Lösung. Zudem sind die Sperreigenschaften derartiger Freilaufmechanismen äußerst effizient und technisch zuverlässig. Der Freilaufmechanismus schützt die Welle und andere mechanische Komponenten vor Schäden durch plötzliche Belastungen. Er ist somit verschleißarm und hat eine hohe Lebensdauer. Darüber hinaus lässt sich ein solcher Freilaufmechanismus sehr platzsparend auf der Welle der Presse anbringen, so dass die Hubfreigabeeinrichtung äußerst wenig Platz in Anspruch nimmt.

Vorzugsweise ist der Freilaufmechanismus dazu eingerichtet, einen Freilauf der Welle in einer der ersten Drehrichtung entgegengesetzten zweiten Drehrichtung zu ermöglichen und zwischen der Sperrstellung, in der der Freilaufmechanismus eine Rotation der Welle in der ersten Drehrichtung mechanisch blockiert, und der Freigabestellung, in der der Freilaufmechanismus einen Freilauf der Welle in der ersten Drehrichtung ermöglicht, schaltbar ist. Auch an dieser Stelle ist wieder ein mechanisches Schalten gemeint.

Gewöhnliche Freilaufmechanismen zeichnen sich dadurch aus, dass sie eine Drehrichtung sperren und in der entgegengesetzten Richtung freilaufen. Gewöhnliche Freilaufmechanismen können also in einer Drehrichtung (der gesperrten Drehrichtung) Drehmomente übertragen und in der entgegengesetzten Drehrichtung einen Freilauf zulassen. Bei dem erfindungsgemäß eingesetzten Freilaufmechanismus handelt es sich hingegen um einen Freilaufmechanismus, dessen Sperrung in der Sperrrichtung aufhebbar ist. In Bezug auf die erste Drehrichtung lässt er sich somit also zwischen einer Sperrstellung und einer Freigabestellung schalten, während er in der entgegengesetzten zweiten Drehrichtung (wie für einen Freilauf typisch) dauerhaft freiläuft.

Diese Schaltbarkeit des Freilaufmechanismus ermöglicht es, die notwendige Funktion der Hubfreigabeeinrichtung auf mechanisch einfache, aber technisch zuverlässige Art und Weise zu lösen. Durch die Hubfreigabebetätigung wird der Freilaufmechanismus nämlich von seiner Sperrstellung in seine Freigabestellung gebracht, so dass die Welle in der ersten Drehrichtung freiläuft und die Hubbewegung damit freigegeben ist. Ohne die Hubfreigabebetätigung springt der Freilaufmechanismus umgehend in seine Sperrstellung zurück, wodurch eine Drehung der Welle in der ersten Drehrichtung verhindert wird. Die Hubbewegung ist damit gesperrt. Aufgrund des Freilaufs in der entgegengesetzten zweiten Drehrichtung ist eine Rückstellbewegung des Betätigungsorgans der Presse dauerhaft möglich.

Gemäß einer weiteren Ausgestaltung weist der Freilaufmechanismus eine Vielzahl von Wälzkörpern auf, die in einem drehbar auf der Welle gelagerten Wälzkörperträger winkelsynchron auf der Welle geführt sind.

Wie nachfolgend im Detail erläutert wird, wird dieser Wälzkörperträger mitsamt den darin befindlichen Wälzkörpern zur Hubfreigabebetätigung relativ zu der Welle rotiert. Während der Hubbewegung steht der Wälzkörperträger jedoch in der Regel still, wobei sich die Welle inklusive der Wälzkörper dann relativ zu dem Wälzkörperträger bewegen.

Durch die Verwendung von beispielsweise kugelförmigen oder zylindrischen Wälzkörpern wird eine extrem reibungsarme Lösung realisiert, die eine gleichmäßige und effiziente Bewegung der Welle ermöglicht. Zudem wird die Stabilität des Systems durch die synchrone Führung der Wälzkörper auf der Welle erhöht.

Gemäß einer weiteren Ausgestaltung weist der Freilaufmechanismus ein mit den Wälzkörpern zusammenwirkendes Freilauf-Gehäuse auf, welches an der Presse fixiert ist und eine Vielzahl von Aufnahmenestern zur Aufnahme jeweils eines der Wälzkörper aufweist.

Die Aufnahmenester sind vorzugsweise symmetrisch um die Welle herum angeordnet. Hierdurch ist eine gleichmäßige Lastverteilung gewährleistet, wodurch auch ein einseitiger Verschleiß verhindert wird. Das fest (unbeweglich) mit der Presse verbundene Freilauf-Gehäuse sorgt für eine stabile und zuverlässige Funktion des Freilaufmechanismus.

Gemäß einer Ausgestaltung bewirkt die Hubfreigabebetätigung eine Rotation des Wälzkörperträgers in der zweiten Drehrichtung, wodurch die Wälzkörper aus einer Klemmstellung, in der die Wälzkörper zwischen der Welle und dem Freilauf-Gehäuse geklemmt sind, in eine Freilaufstellung, in der die Wälzkörper zwischen der Welle und dem Freilauf-Gehäuse in den Aufnahmenestern abrollen können.

Zur Hubfreigabe wird der Wälzkörperträger mitsamt den darin geführten Wälzkörpern entgegengesetzt zu dem Betätigungsorgan (in der zweiten Drehrichtung) rotiert. Hierdurch wird der Klemmkontakt zwischen den Aufnahmenestern, den Wälzkörpern und der Welle aufgehoben, so dass sich die Welle dann auch in der ersten Drehrichtung durch das Betätigungsorgan drehen lässt und ein Pressvorgang durchgeführt werden kann. Während des Pressvorgangs, also während des Betätigens des Betätigungsorgans, muss gleichzeitig auch die Hubfreigabebetätigung erfolgen. Mit anderen Worten muss der Wälzkörperträger mit Hilfe des Hubfreigabe-Betätigungselements in der Freilaufstellung gehalten werden.

Gemäß einer weiteren Ausgestaltung übt das Federelement eine Kraft in der ersten Drehrichtung auf den Wälzkörperträger oder auf ein drehfest mit dem Wälzkörperträger verbundenes Bauteil aus.

Das Federelement sorgt somit dafür, dass die Wälzkörper in der Klemmstellung sind bzw. automatisch in die Klemmstellung zurück gelangen, sobald das Hubfreigabe-Betätigungselement nicht (mehr) betätigt wird. Somit ist für maximale Sicherheit gesorgt, da eine stufenlose Sperrung gewährleistet ist.

Gemäß einer weiteren Ausgestaltung weist die Hubfreigabeeinrichtung eine erste Aufnahme zur Aufnahme des Federelements und eine zweite Aufnahme zur Aufnahme des Federelements auf, wobei das Federelement relativ zu dem Wälzkörperträger oder dem drehfest mit dem Wälzkörperträger verbundenen Bauteil eine erste Wirkrichtung hat, wenn es in die erste Aufnahme eingesetzt ist, und wobei das Federelement relativ zu dem Wälzkörperträger oder dem drehfest mit dem Wälzkörperträger verbundenen Bauteil eine der ersten Wirkrichtung entgegengesetzte zweite Wirkrichtung hat, wenn es in die zweite Aufnahme eingesetzt ist.

Dies erlaubt eine Anpassung der Wirkrichtung des Federelements, wodurch es möglich ist, die Einbauseite der Freigabeeinrichtung auf die gegenüberliegende Seite zu wechseln, beispielsweise um die Presse von einer Rechtshänder-Presse in eine Linkshänder-Presse umzuwandeln.

Das Vorsehen der zweiten Aufnahme ermöglicht zudem die Anbringung eines zweiten Hubfreigabe-Betätigungselements. Beispielsweise kann bei einer Anbringung des Federelements in der ersten Aufnahme in der zweiten Aufnahme ein zweites Hubfreigabe-Betätigungselement angeordnet werden, welches sich von einem Bedienpult aus aktivieren lässt. Beispielsweise kann das zweite Hubfreigabe-Betätigungselement als Drahtauslöser ausgestaltet sein, der von einem Bedienpult gesteuert wird, welches beabstandet zu der Presse angeordnet ist. Dies kann erhebliche ergonomische Vorteile im Vergleich zu einer Betätigung des (ersten) Hubfreigabe-Betätigungselements bieten.

Gemäß einer weiteren Ausgestaltung sind die Aufnahmenester jeweils symmetrisch zu einer jeweiligen Radialebene der Welle ausgestaltet, welche das jeweilige Aufnahmenest in zwei gleich große Hälften teilt und durch eine jeweilige Radialrichtung der Welle und eine Axialrichtung der Welle aufgespannt wird.

Insofern lässt sich die Freilauf-Richtung und die schaltbare Sperrrichtung des Freilaufmechanismus mit ein und denselben Bauteilen problemlos umkehren. Bei einem Umbau von einer Rechtshänder-Presse auf eine Linkshänder-Presse kann dementsprechend der gleiche Freilaufmechanismus eingesetzt werden, ohne Teile austauschen zu müssen.

Gemäß einer weiteren Ausgestaltung sind die Aufnahmenester und Wälzkörper in Umfangsrichtung der Welle regelmäßig verteilt angeordnet.

Besonders bevorzugt sind die Aufnahmenester und Wälzkörper drehsymmetrisch um die Welle herum verteilt angeordnet. Beispielsweise bilden die Aufnahmenester im Querschnitt zusammen betrachtet eine Art blumenförmige Kontur. Dies sorgt für eine gleichmäßige Kraftverteilung und eine entsprechende Rundlaufgenauigkeit der Welle.

Gemäß einer weiteren Ausgestaltung weist die handbetätigte Presse ferner ein Schiebergehäuse auf, in dem der Pressenstößel längs geführt ist und/oder in dem die Welle angeordnet ist, wobei das Betätigungsorgan auf einer ersten Seite des Schiebergehäuses angeordnet ist und die Hubfreigabeeinrichtung auf einer zweiten Seite des Schiebergehäuses angeordnet ist, welche der ersten Seite gegenüberliegt.

Gemäß einer weiteren Ausgestaltung weist das Betätigungsorgan einen Schwenkhebel auf. Im Falle einer Zahnstangenpresse ist das Betätigungsorgan vorzugsweise drehfest mit der Welle verbunden.

Beispielsweise ist das Betätigungsorgan über eine Verzahnung mit der Welle verbunden. Insbesondere kann das Betätigungsorgan eine Innenverzahnung aufweisen, welche in eine korrespondierende Außenverzahnung, welche an der Welle vorgesehen ist, eingreift.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in den nachfolgenden Zeichnungen dargestellt und wird in der nachfolgenden Beschreibung näher erläutert. Es zeigen:
- Fig. 1: eine Draufsicht von vorne auf eine handbetätigten Presse gemäß einem Ausführungsbeispiel der vorliegenden Erfindung;
- Fig. 2: eine perspektivische Ansicht der in Fig. 1 gezeigten Presse;
- Fig. 3: eine perspektivische Ansicht einer in der Presse verwendeten Welle;
- Fig. 4: eine perspektivische Ansicht der in Fig. 3 gezeigten Welle zusammen mit einer an der Welle montierten Hubfreigabeeinrichtung;
- Fig. 5: eine Querschnittsansicht der Welle mit Hubfreigabeeinrichtung, wobei sich die Hubfreigabeeinrichtung in Fig. 5a in einer Sperrstellung befindet und in Fig. 5b in einer Freigabestellung befindet;
- Fig. 6: eine weitere Querschnittsansicht der Welle mit Hubfreigabeeinrichtung, wobei sich die Hubfreigabeeinrichtung in Fig. 6a in der Sperrstellung und in Fig. 6b in der Freigabestellung befindet;
- Fig. 7: einen Wälzkörperträger mit darin eingesetzten Wälzkörpern in einer ersten perspektivischen Ansicht (Fig. 7a), in einer zweiten perspektivischen Ansicht (Fig. 7b) und in einer Draufsicht von vorne (Fig. 7c); und
- Fig. 8: ein Freilauf-Gehäuse in einer perspektivischen Ansicht (Fig. 8a), in einer perspektivischen Ansicht mit darin eingesetztem Wälzkörperträger und Wälzkörpern (Fig. 8b), in einer Draufsicht von vorne auf das Freilauf-Gehäuse (Fig. 8c) und in einer Draufsicht von vorne auf das Freilauf-Gehäuse mit darin eingesetztem Wälzkörperträger und Wälzkörpern (Fig. 8d).

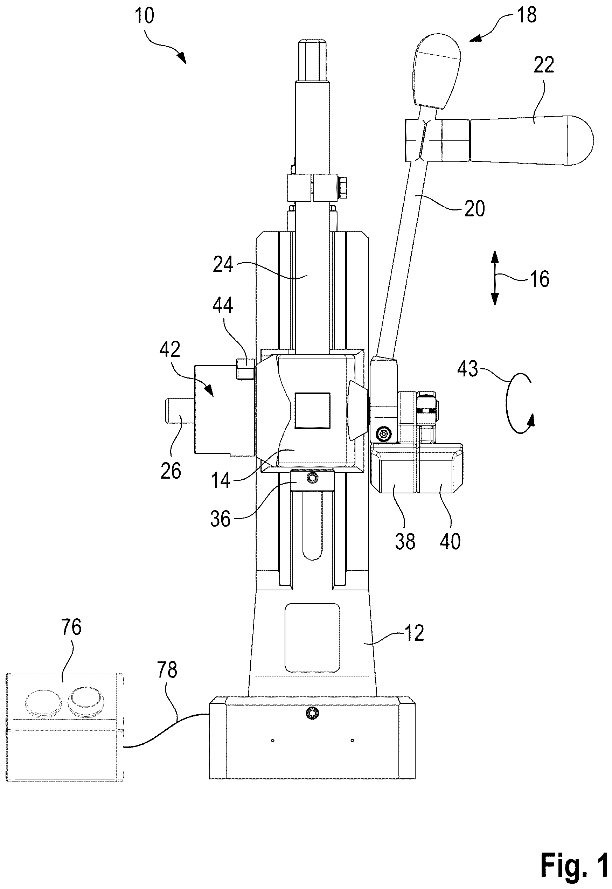

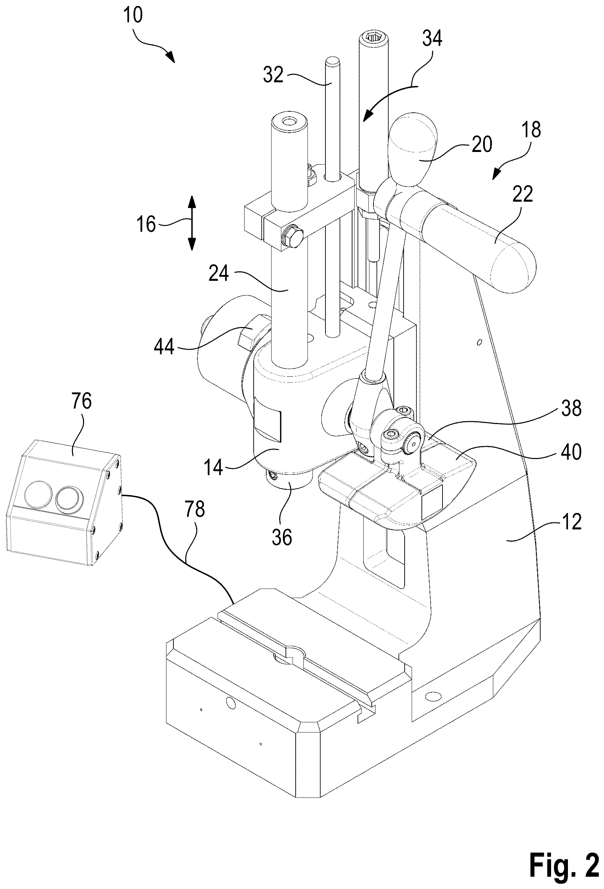

Fig. 1 und 2 zeigen ein Ausführungsbeispiel einer handbetätigten Presse gemäß der vorliegenden Erfindung in zwei verschiedenen Ansichten. Die Presse ist darin gesamthaft mit der Bezugsziffer 10 gekennzeichnet.

Die Presse 10 weist ein Basisteil 12 auf, welches typischerweise als Pressenständer bezeichnet wird. Der Pressenständer 12 bildet die Grundstruktur der Presse 10 und dient im Wesentlichen als Träger für die übrigen Bauteile der Presse 10. Der Pressenständer 12 wird üblicherweise auf einem Untergrund, beispielsweise einer Werkbank, abgestellt.

Am Pressenständer 12 ist ein sog. Schiebergehäuse 14 montiert, das in dem vorliegend gezeigten Ausführungsbeispiel entlang der Höhenrichtung, welche mit dem Doppelpfeil 16 gekennzeichnet ist, am Pressenständer 12 verstellbar angeordnet ist. Durch diese Verstellbarkeit lässt sich das Schiebergehäuse 14 je nach Werkstückgröße und nach gewünschtem Hub entlang der Höhenrichtung 16 entsprechend einstellen.

Seitlich an dem Schiebergehäuse 14 ist ein Betätigungsorgan 18 angebracht. Dieses Betätigungsorgan 18 dient der Betätigung der Presse 10 von Hand. In dem vorliegend gezeigten Ausführungsbeispiel weist das Betätigungsorgan 18 einen länglichen Betätigungshebel 20 auf. Anstelle eines Betätigungshebels 20 kann grundsätzlich auch ein Rad oder ein anderweitiger Griff verwendet werden, um die Presse 10 von Hand zu betätigen.

Das Betätigungsorgan 18 weist in dem vorliegend gezeigten Ausführungsbeispiel zusätzlich zu dem Betätigungshebel 20 einen Ergogriff 22 auf. Dieser Ergogriff 22 ist lediglich optional vorgesehen. Er verhindert bei großen Schwenkbewegungen des Betätigungsorgans 18 ein lästiges Umgreifen an dem Betätigungshebel 20 und ist daher sowohl ergonomisch als auch sicherheitstechnisch von Vorteil, da die Hand eines Bedieners bei einem solchen Umgreifen ansonsten relativ leicht von dem Betätigungshebel 20 abrutschen könnte.

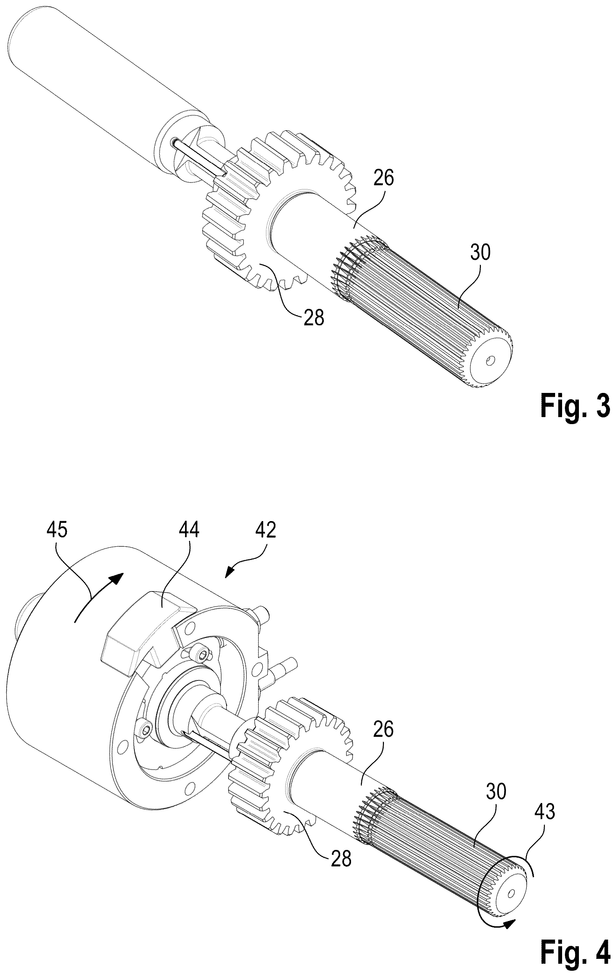

Die Presse 10 ist gemäß dem vorliegend gezeigten Ausführungsbeispiel als Zahnstangenpresse ausgestaltet. Im Schiebergehäuse 14 ist ein Pressenstößel 24 längs geführt. Quer, vorzugsweise orthogonal dazu, ist in dem Schiebergehäuse 14 eine Welle 26 angeordnet, welche in Fig. 3 und 4 gezeigt ist und vorliegend als Stirnradwelle ausgestaltet ist. Die Welle 26 ist in dem Schiebergehäuse 14 drehbar gelagert. Das Stirnrad 28 ist vorzugsweise integral mit der Welle 26 verbunden. Alternativ kann die Welle 26 aber auch mehrteilig ausgestaltet sein, wobei das Stirnrad 28 in einer entsprechenden Wellen-Nabe-Verbindung auf der Welle 26 angeordnet ist.

Über das Stirnrad 28 ist die Welle 26 mit dem Pressenstößel 24 gekoppelt. Ferner weist die Welle 26 eine Außenverzahnung 30 auf, über die die Welle mit dem Betätigungsorgan 18 gekoppelt ist. Hierzu weist das Betätigungsorgan 18 am unteren Ende des Betätigungshebels 20 eine Innenverzahnung (nicht gezeigt) auf, welche mit der Außenverzahnung 30 korrespondiert und in diese eingreift. Das Stirnrad 28 greift hingegen in eine auf der Hinterseite des Pressenstößels 24 vorgesehene Verzahnung (nicht gezeigt) ein, die entlang der Höhenrichtung 16 verläuft und in den Pressenstößel 24 eingebracht ist. Die Welle 26 ist mit dem Betätigungsorgan 18 somit derart bewegungsgekoppelt, dass die Welle 26 bei einer Betätigung des Betätigungsorgans 28 in einer ersten Drehrichtung 43 rotiert (siehe Fig. 1 und 4).

Eine Betätigung des Betätigungsorgans 18 in Richtung des in Fig. 2 gezeigten Pfeils 34 führt zu einer Hubbewegung des Pressenstößels 24, bei der der Pressenstößel 24 in Höhenrichtung 16 nach unten bewegt wird. Eine parallel zu dem Pressenstößel 24 verlaufende Achse 32, die ebenfalls in dem Schiebergehäuse 14 längs geführt ist, verhindert während dieser Hubbewegung eine Verdrehung des Pressenstößels 24. Die Achse 32 wird daher auch als Verdrehsicherung bezeichnet.

Am unteren Ende des Pressenstößels 24 ist eine Werkzeugaufnahme 36 zur Aufnahme kundenspezifischer Presswerkzeuge angebracht. An diese Werkzeugaufnahme 36 lassen sich unterschiedliche Presswerkzeuge relativ einfach mit Hilfe eines Befestigungsmittels, beispielsweise mit Hilfe einer Schraube, befestigen. Alternativ dazu könnte das Presswerkzeug auch integral mit dem Pressenstößel 24 ausgestaltet sein, sofern bei der Presse 10 kein Werkzeugwechsel erwünscht wäre.

Zur Erleichterung der Bedienbarkeit weisen derartige Pressen 10 meist einen Rückstellmechanismus auf, welcher der Rückstellung des Pressenstößels 24 und somit auch des Betätigungsorgans 18 dient. Die durch den Rückstellmechanismus bewirkte Rückstellbewegung des Pressenstößels 24 bzw. des Betätigungsorgans 18 ist der Hubbewegung des Pressenstößels 24 bzw. der Betätigungsbewegung des Betätigungsorgans 18 entgegengesetzt. Nach einem erfolgten Pressvorgang werden der Pressenstößel 24 und das Betätigungsorgan 18 somit wieder in ihre Ausgangsstellung, die in Fig. 1 und 2 gezeigt ist, zurückgebracht.

An der Welle 26 sind ferner zwei Gegengewichte 38, 40 angebracht. Diese Gegengewichte 38, 40 dienen als Ausgleich für das Eigengewicht des Betätigungshebels 20 sowie des Ergogriffs 22. Sofern der Ergogriff 22 nicht verwendet wird, kann auf das zweite Gegengewicht 40 verzichtet werden. Hierzu muss dieses lediglich von der Welle 26 demontiert werden.

Die beiden Gegengewichte bewirken einen Drehmomentausgleich, durch den sich das Betätigungsorgan unabhängig von dessen Winkelstellung kontinuierlicher bewegen lässt. Dies ermöglicht eine für den Bediener der Presse 10 angenehme Art der Betätigung ohne sich verändernde Kraft- bzw. Momentverhältnisse während der Betätigung des Betätigungsorgans 18. Zudem erfolgt aufgrund der Gegengewichte 38, 40 auch die Rückstellbewegung des Pressenstößels 24 und somit auch des Betätigungsorgans 18 in kontinuierlicher Art und Weise.

Durch das Vorsehen der Gegengewichte 38, 40 lässt sich auch der Rückstellmechanismus geringer dimensionieren. Dies wiederum resultiert in einer weniger starken Beschleunigung des Betätigungsorgans 18 durch den Rückstellmechanismus während der Rückstellbewegung. Ein Gefahrenpotenzial für den Bediener der Presse 10 lässt sich dadurch wesentlich minimieren.

Zur weiteren Reduktion des Gefahrenpotenzials für den Bediener der Presse 10 ist eine Hubfreigabeeinrichtung 42 vorgesehen, deren Details in den Fig. 4-8 gezeigt sind. Durch diese Hubfreigabeeinrichtung 42 lässt sich eine Hubfreigabe bewirken, durch die sich der Pressenstößel 24 zur Ausführung eines Pressvorgangs entlang der Höhenrichtung 16 nach unten bewegen lässt. Ohne eine Betätigung der Hubfreigabeeinrichtung 42 (Hubfreigabebetätigung) ist die Hubbewegung des Pressenstößels 24 gesperrt. Das Betätigungsorgan 18 lässt sich dann nicht entlang dem Pfeil 34 verschwenken. Ein Pressvorgang ist dann nicht möglich.

Erfolgt mit Hilfe der Hubfreigabeeinrichtung 42 jedoch eine Freigabebetätigung, so wird die Hubbewegung des Pressenstößels 24 freigegeben, so dass sich der Pressenstößel 24 mit Hilfe des Betätigungsorgans 18 in der Höhenrichtung 16 nach unten bewegen lässt, um einen Pressvorgang auszuführen.

Die Hubfreigabeeinrichtung 42 wirkt erfindungsgemäß auf die Welle 26 ein, um eine Drehung dieser mechanisch zu blockieren oder freizugeben. Mit anderen Worten ist die Hubfreigabeeinrichtung 42 dazu eingerichtet, durch eine Hubfreigabebetätigung von einer Sperrstellung, in der die Hubfreigabeeinrichtung 42 die Hubbewegung des Pressenstößels 24 sperrt, indem sie eine Rotation der Welle 26 in der ersten Drehrichtung 43 mechanisch blockiert, in eine Freigabestellung, in der die Hubfreigabeeinrichtung 42 die Hubbewegung des Pressenstößels 24 freigibt, indem sie eine Rotation der Welle 26 in der ersten Drehung 43 mechanisch ermöglicht.

Die Hubfreigabebetätigung lässt sich mit Hilfe eines Hubfreigabe-Betätigungselements 44 bewirken. Dieses Hubfreigabe-Betätigungselement 44 ist in dem vorliegend gezeigten Ausführungsbeispiel als Schiebeknopf ausgestaltet, welcher zur Bewirkung der Hubfreigabebetätigung entlang einer zweiten Drehrichtung 45 verschwenkt wird, die der ersten Drehrichtung 43 entgegengesetzt ist. In dem vorliegend gezeigten Ausführungsbeispiel entspricht die erste Drehrichtung 43 dem Gegenuhrzeigersinn, während die zweite Drehrichtung 45 dem Uhrzeigersinn entspricht.

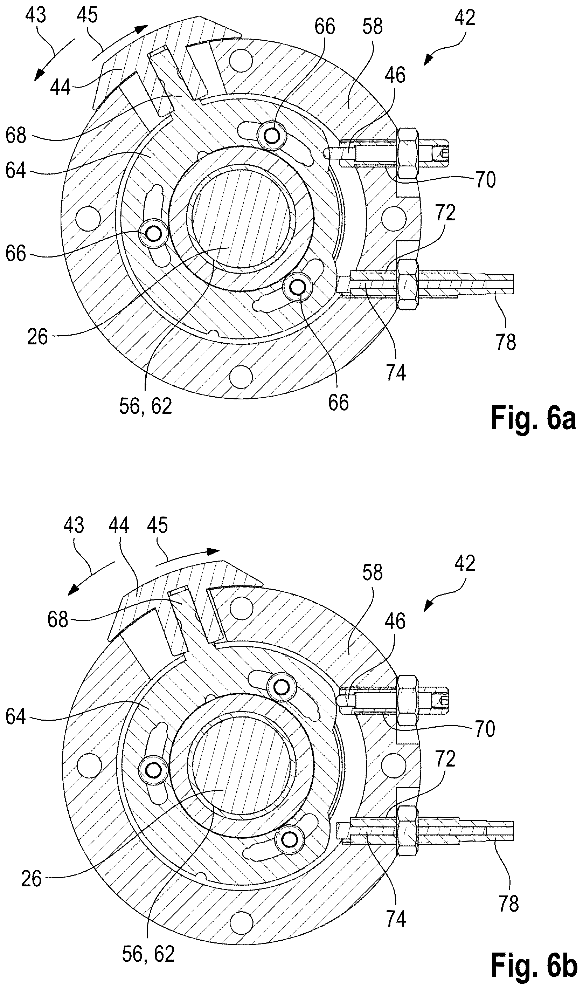

Die Hubfreigabebetätigung ist in jeder Stellung des Betätigungsorgans bzw. in jeder Stellung der Welle 26 möglich. Insofern lässt sich die Bewegung der Welle 26 in Drehrichtung 43 und damit auch die Hubbewegung des Pressenstößels 24 in jeder Winkelstellung der Welle 26 entlang der ersten Drehrichtung 43 stufenlos sperren oder freigeben. Ein Federelement 46 (siehe Fig. 6a und 6b) übt auf das Hubfreigabe-Betätigungselement 44 eine der Hubfreigabebetätigung entgegengesetzte Kraft aus. Hierdurch wird bewirkt, dass die Hubfreigabeeinrichtung 42 automatisch in ihre Sperrstellung zurückschnappt, sobald der Bediener der Presse 10 das Hubfreigabe-Betätigungselement 44 loslässt.

Wie nachfolgend im Detail erläutert wird, muss der Bediener der Presse 10 somit das Hubfreigabe-Betätigungselement 44 dauerhaft entgegen der Federkraft des Federelements 46 in Richtung der zweiten Drehrichtung 45 gedrückt halten, um mit Hilfe des Betätigungsorgans 18 einen Pressvorgang durchführen zu können. Die Hubfreigabeeinrichtung 42 bzw. das Hubfreigabe-Betätigungselement 44 und das Betätigungsorgan 18 sind daher vorzugsweise auf gegenüberliegenden Seiten des Schiebergehäuses 14 angeordnet. Der Bediener kann somit mit seiner linken Hand das Hubfreigabe-Betätigungselement 44 nach vorne in Richtung der zweiten Drehrichtung 45 gedrückt halten, während er das Betätigungsorgan 18 mit seiner rechten Hand entlang der Schwenkrichtung 34 entgegengesetzt dazu verschwenkt. Es versteht sich, dass sich die Presse 10 für Linkshänder auch exakt umgekehrt ausführen lässt, so dass die Hubfreigabeeinrichtung 42 auf der rechten Seite des Schiebergehäuses 14 angeordnet ist und das Betätigungsorgan 18 entsprechend auf der gegenüberliegenden linken Seite des Schiebergehäuses 14 angeordnet ist.

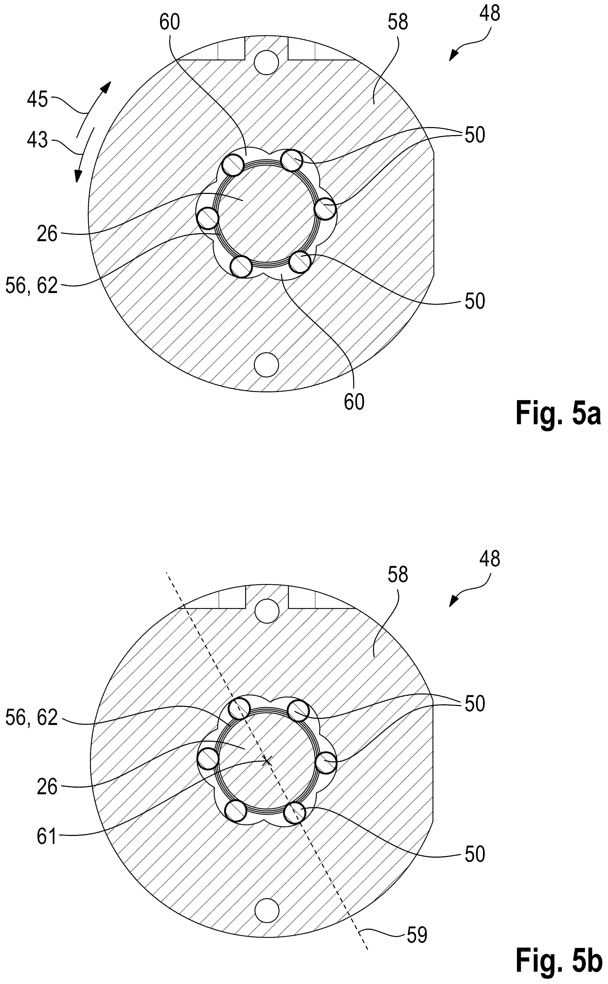

Das Funktionsprinzip der Hubfreigabeeinrichtung 42 basiert gemäß dem vorliegend gezeigten Ausführungsbeispiel im Wesentlichen auf einem mechanischen Freilaufmechanismus 48, dessen Einzelteile in verschiedenen Ansichten in den Fig. 5-8 veranschaulicht sind. Der Freilaufmechanismus 48 ist dazu eingerichtet, einen Freilauf der Welle 26 in der zweiten Drehrichtung 45 (Rückstellrichtung) zu ermöglichen, während er sich in der ersten Drehrichtung 43 (Hubrichtung) zwischen einer Sperrstellung, in der der Freilaufmechanismus 48 eine Rotation der Welle 26 in der ersten Drehrichtung 43 mechanisch blockiert, und einer Freigabestellung, in der der Freilaufmechanismus 48 einen Freilauf der Welle 26 in der ersten Drehrichtung 43 ermöglicht, schalten lässt.

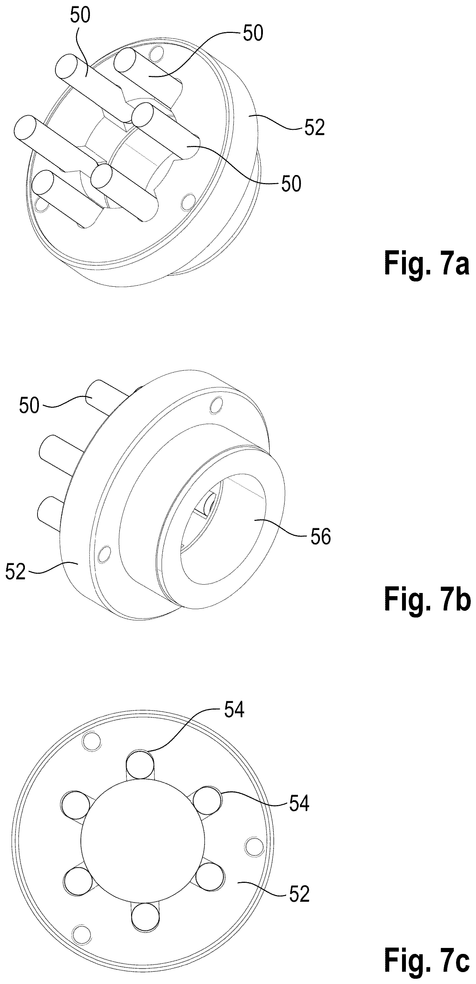

Der Freilaufmechanismus 48 weist mehrere (hier sechs) Wälzkörper 50 auf, die in einem drehbar auf der Welle 26 gelagerten Wälzkörperträger 52 winkelsynchron auf der Welle 26 geführt sind (siehe Fig. 7a-7c und 5a-5b). Die Wälzkörper 50 sind hier als zylindrische Rollen ausgestaltet. Der Wälzkörperträger 52 bildet eine Art Käfig mit einer der Anzahl der Wälzkörper 50 entsprechenden Nuten 54, in denen die Wälzkörper 50 aufgenommen sind. Die Wälzkörper 50 werden somit durch den Wälzkörperträger 52 winkelsynchron und achsparallel auf der Welle 26 geführt. Zudem ist auf der Hinterseite des Wälzkörperträgers 52 eine Gleitlagerbuchse 56 vorgesehen. Die Gleitlagerbuchse 56 wird durch die Welle 26 geführt und ermöglicht dem Wälzkörperträger 52 somit einen rotativen Freiheitsgrad. Wie nachfolgend im Detail erläutert, wird der Wälzkörperträger 52 zur Hubfreigabebetätigung mitsamt dem darin angeordneten Wälzkörper 50 relativ zu der Welle 26 in der zweiten Drehrichtung 45 rotiert.

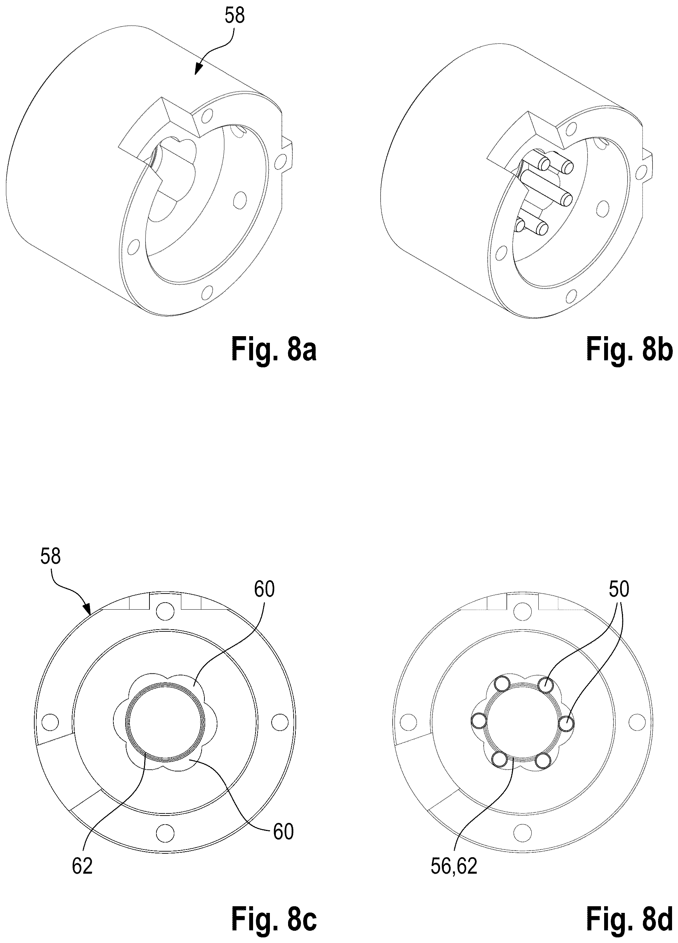

Ferner weist der Freilaufmechanismus 48 ein mit dem Wälzkörper 50 zusammenwirkendes Freilauf-Gehäuse 58 auf, welches im Detail in Fig. 8a und 8c gezeigt ist. Das Freilauf-Gehäuse 58 ist an der Presse 10 fixiert, also mit anderen Worten unbeweglich. Das Freilauf-Gehäuse 58 ist drehfest in dem Schiebergehäuse 14 befestigt.

Das Freilauf-Gehäuse 58 weist in seinem Inneren eine der Anzahl der Wälzkörper 50 entsprechende Anzahl von Aufnahmenestern 60 auf, welche in der in Fig. 8c gezeigten Draufsicht von vorne gemeinsam eine Art Blumenkontur bilden. Jedes Aufnahmenest 60 dient somit der Aufnahme jeweils eines der Wälzkörper 50 (siehe Fig. 5a, 5b und 8d).

Die Aufnahmenester 60 sind jeweils symmetrisch zu einer jeweiligen Radialebene 59 der Welle 26 ausgestaltet, welche das jeweilige Aufnahmenest 60 in zwei gleich große Hälften teilt und durch eine jeweilige Radialrichtung der Welle 26 und eine Axialrichtung 61 der Welle 26 aufgespannt wird. Diese Radialebene 59 ist in Fig. 5b für zwei Aufnahmenester 60 gestrichelt dargestellt. Die Axialrichtung 61 der Welle 26 ist in Fig. 5b als Kreuz dargestellt. Sie verläuft senkrecht zur Blattebene.

Die Aufnahmenester 60 sind derart ausgebildet, dass die Wälzkörper 50 entweder auf der rechten oder wie in Fig. 5a gezeigt auf der linken Seite des jeweiligen Aufnahmenestes 60 einen Kontakt zu der Welle 26 als auch zum Aufnahmenest 60 herstellen. Die in Fig. 5a gezeigte Stellung des Freilaufmechanismus 48 wird als Sperrstellung des Freilaufmechanismus 48 bezeichnet. Hier befinden sich die Wälzkörper 50 in einer Klemmstellung, in der sie zwischen der Welle 26 und dem Freilauf-Gehäuse 58 eingeklemmt sind. Eine Rotation der Welle 26 in der ersten Drehrichtung 43 ist in dieser Sperrstellung bzw. Klemmstellung nicht möglich.

Um den Freilaufmechanismus 48 und damit die Hubfreigabeeinrichtung 42 in seine bzw. ihre Freigabestellung zu bringen, müssen die Wälzkörper 50 aus ihrer in Fig. 5a gezeigten Klemmstellung in ihre in Fig. 5b gezeigte Freilaufstellung gebracht werden. Dies erfolgt dadurch, dass der Wälzkörperträger 52 in der zweiten Drehrichtung 45 relativ zu dem Freilauf-Gehäuse 58 bewegt wird. Wie in Fig. 5b ersichtlich ist, befinden sich die Wälzkörper 50 dann nicht mehr am Rand der Aufnahmenester 60, sondern in deren jeweiliger Mitte. Hierdurch entsteht ein geringes Spiel, das es den Wälzkörpern 50 erlaubt, sich zwischen der Welle 26 und dem Freilauf-Gehäuse 58 zu bewegen bzw. zwischen diesen abzurollen. Solange der Wälzkörperträger 52 mitsamt den Wälzkörpern 50 in dieser Stellung gehalten wird, befinden sich die Wälzkörper 50 in ihrer Freilaufstellung und der Freilaufmechanismus 48 somit in seiner Freigabestellung. Die Welle 26 kann dann in der ersten Drehrichtung 43 bewegt werden. In dem Freilauf-Gehäuse 58 wird die Welle 26 mit Hilfe eines zusätzlichen Gleitlagers 62 geführt.

Fig. 6a und 6b verdeutlichen das Zusammenspiel des Hubfreigabe-Betätigungselements 44 mit dem Wälzkörperträger 52. An dem Wälzkörperträger 52 ist ein Betätigungsblech 64 mit Hilfe von drei Schrauben 66 befestigt. Das Betätigungsblech 64 weist einen Mitnehmer 68 auf, an dessen oberen Ende das Hubfreigabe-Betätigungselement 44 angeordnet ist. An dem Betätigungselement greift gleichzeitig das Federelement 46 an. Das Federelement 46 sorgt dafür, dass das Betätigungsblech 64 mitsamt dem Hubfreigabe-Betätigungselement 44 relativ zu dem Freilauf-Gehäuse 58 in Richtung der ersten Drehrichtung 43 bewegt wird. Solange das Hubfreigabe-Betätigungselement 44 nicht betätigt wird, befindet sich die Hubfreigabeeinrichtung 42 somit in der in Fig. 6a gezeigten Sperrstellung, welche der in Fig. 5a gezeigten Klemmstellung der Wälzkörper 50 entspricht.

Wird das Hubfreigabe-Betätigungselement 44 nun entlang der zweiten Drehrichtung 45 bewegt, bewegt sich das Betätigungsblech 64 zusammen mit dem daran befestigten Wälzkörperträger 52 in der zweiten Drehrichtung 45 mit, wodurch die Wälzkörper 50 in die in Fig. 5b gezeigte Freilaufstellung gebracht werden. Die Welle 26 lässt sich dann in der ersten Drehrichtung 43 mit Hilfe des Betätigungsorgans 18 bewegen. Der Pressvorgang kann also durchgeführt werden.

Das Federelement 46 übernimmt im Übrigen noch die Funktion eines Endanschlags. Wird das Hubfreigabe-Betätigungselement 44 betätigt, so wird der Drehwinkel des Betätigungsblechs 64 und damit auch des Wälzkörperträgers 52 durch ein feststehendes Gehäuseteil des Federelements 46 begrenzt, so dass sich die Wälzkörper 50 in der Freilaufzone befinden und nicht auf der gegenüberliegenden rechten Seite der Aufnahmenester 60 in der Sperrstellung an dem Freilauf-Gehäuse 58 anliegen.

Das Freilauf-Gehäuse 58 weist neben der ersten Aufnahme 70, in der das Federelement 46 angeordnet ist, auch noch eine zweite Aufnahme 72 auf, welche ebenfalls dazu ausgestaltet ist, ein Federelement wie das Federelement 46 aufzunehmen. Durch Anbringung des Federelements 46 in der zweiten Aufnahme 72 lässt sich somit die Wirkrichtung des Freilaufmechanismus 48 und damit die Wirkrichtung der Hubfreigabeeinrichtung 42 umkehren. Zum Umbau der in Fig. 1 und 2 gezeigten Presse 10 in eine Linkshänder-Presse müssen also lediglich die Positionen des Betätigungsorgans 18 und der Hubfreigabeeinrichtung 42 getauscht werden und das Federelement 46 in der zweiten Aufnahme 72 anstelle der ersten Aufnahme 70 angeordnet werden.

In der zweiten Aufnahme 72 ist in dem vorliegend gezeigten Ausführungsbeispiel anstelle eines Federelements jedoch ein sog. Drahtauslöser 74 angeordnet. Dieser Drahtauslöser 74 lässt sich über ein Bedienpult 76 steuern, welches neben der Presse 10 angeordnet ist und über eine kabelgebundene Verbindung 78 mit der Presse 10 verbunden ist. Der Drahtauslöser 74 bietet die Möglichkeit, die Hubfreigabe mit Hilfe des Bedienpults 76 zu aktivieren, ohne das Hubfreigabebetätigungselement 44 betätigen zu müssen. Der Drahtauslöser 74 dient zusammen mit dem Bedienpult 76 somit als zweites Hubfreigabe-Betätigungselement. In diesem Fall muss die Bedienperson der Presse 10 ihre zweite Hand nicht notwendigerweise an die Hubfreigabeeinrichtung 42 bzw. das Hubfreigabe-Betätigungselement 44 anlegen, sondern kann die Aktivierung der Hubfreigabe auch über ein externes Betätigungsorgan (das Bedienpult 76) vornehmen. Dies bietet erhebliche ergonomische Vorteile.

## Patentansprüche

1. Handbetätigte Presse (10), aufweisend:
- ein Betätigungsorgan (18), dessen Betätigung in eine Hubbewegung eines Pressenstößels (24) umgesetzt wird;
- eine Welle (26), die mit dem Betätigungsorgan (18) derart bewegungsgekoppelt ist, dass die Welle (26) bei einer Betätigung des Betätigungsorgans (18) in einer ersten Drehrichtung (43) rotiert; und
- eine Hubfreigabeeinrichtung (42), die dazu eingerichtet ist, durch eine Hubfreigabebetätigung von einer Sperrstellung, in der die Hubfreigabeeinrichtung (42) die Hubbewegung sperrt, indem sie eine Rotation der Welle (26) in der ersten Drehrichtung (43) mechanisch blockiert, in eine Freigabestellung, in der die Hubfreigabeeinrichtung (42) die Hubbewegung freigibt, in dem sie eine Rotation der Welle (26) in der ersten Drehrichtung (43) mechanisch ermöglicht.

2. Handbetätigte Presse gemäß Anspruch 1, wobei die Hubfreigabeeinrichtung (42) dazu eingerichtet ist, ohne die Hubfreigabebetätigung in der Sperrstellung zu sein.

3. Handbetätigte Presse gemäß Anspruch 1 oder 2, wobei die Hubfreigabeeinrichtung (42) ein Federelement (46) aufweist, welches der Hubfreigabebetätigung entgegenwirkt.

4. Handbetätigte Presse gemäß einem der Ansprüche 1-3, wobei die Hubfreigabeeinrichtung (42) zwischen der Sperrstellung und der Freigabestellung derart stufenlos schaltbar ist, dass sie ein Schalten zwischen der Sperrstellung und der Freigabestellung in jeder Winkelstellung entlang der ersten Drehrichtung (43) stufenlos ermöglicht.

5. Handbetätigte Presse gemäß einem der Ansprüche 1-4, wobei die Hubfreigabeeinrichtung (42) ein Hubfreigabe-Betätigungselement (44) zur Hubfreigabebetätigung aufweist, dessen Betätigung eine Rotation eines Teils der Hubfreigabeeinrichtung (42) in einer der ersten Drehrichtung (43) entgegengesetzten zweiten Drehrichtung (45) bewirkt.

6. Handbetätigte Presse gemäß einem der Ansprüche 1-5, wobei die Hubfreigabeeinrichtung (42) einen Freilaufmechanismus (48) aufweist.

7. Handbetätigte Presse gemäß Anspruch 6, wobei der Freilaufmechanismus (48) dazu eingerichtet ist, einen Freilauf der Welle (26) in einer der ersten Drehrichtung (43) entgegengesetzten zweiten Drehrichtung (45) zu ermöglichen und zwischen der Sperrstellung, in der der Freilaufmechanismus eine Rotation der Welle (26) in der ersten Drehrichtung (43) mechanisch blockiert, und der Freigabestellung, in der der Freilaufmechanismus (48) einen Freilauf der Welle (26) in der ersten Drehrichtung (43) ermöglicht, schaltbar ist.

8. Handbetätigte Presse gemäß Anspruch 6 oder 7, wobei der Freilaufmechanismus (48) eine Vielzahl von Wälzkörpern (50) aufweist, die in einem drehbar auf der Welle (26) gelagerten Wälzkörperträger (52) winkelsynchron auf der Welle (26) geführt sind.

9. Handbetätigte Presse gemäß Anspruch 8, wobei der Freilaufmechanismus (48) ein mit den Wälzkörpern (50) zusammenwirkendes Freilauf-Gehäuse (58) aufweist, welches an der Presse (10) fixiert ist und eine Vielzahl von Aufnahmenestern (60) zur Aufnahme jeweils eines der Wälzkörper (50) aufweist.

10. Handbetätigte Presse gemäß Anspruch 9, wobei die Hubfreigabebetätigung eine Rotation des Wälzkörperträgers (52) in der zweiten Drehrichtung (45) bewirkt, wodurch die Wälzkörper (50) aus einer Klemmstellung, in der die Wälzkörper (50) zwischen der Welle (26) und dem Freilauf-Gehäuse (58) geklemmt sind, in eine Freilaufstellung, in der die Wälzkörper (50) zwischen der Welle (26) und dem Freilauf-Gehäuse (58) in den Aufnahmenestern (60) abrollen können.

11. Handbetätigte Presse gemäß Anspruch 3 und einem der Ansprüche 8-10, wobei das Federelement (46) eine Kraft in der ersten Drehrichtung (43) auf den Wälzkörperträger (52) oder auf ein drehfest mit dem Wälzkörperträger (52) verbundenes Bauteil (64) ausübt.

12. Handbetätigte Presse gemäß Anspruch 11, wobei die Hubfreigabeeinrichtung (42) eine erste Aufnahme (70) zur Aufnahme des Federelements (46) und eine zweite Aufnahme (72) zur Aufnahme des Federelements (46) aufweist, wobei das Federelement (46) relativ zu dem Wälzkörperträger (52) oder dem drehfest mit dem Wälzkörperträger (52) verbundenen Bauteil (64) eine erste Wirkrichtung (43) hat, wenn es in die erste Aufnahme (70) eingesetzt ist, und wobei das Federelement (46) relativ zu dem Wälzkörperträger (52) oder dem drehfest mit dem Wälzkörperträger (52) verbundenen Bauteil (64) eine der ersten Wirkrichtung entgegengesetzte zweite Wirkrichtung hat, wenn es in die zweite Aufnahme (72) eingesetzt ist.

13. Handbetätigte Presse gemäß einem der Ansprüche 9-12, wobei die Aufnahmenester (60) jeweils symmetrisch zu einer jeweiligen Radialebene (59) der Welle (26) ausgestaltet sind, welche das jeweilige Aufnahmenest (60) in zwei gleich große Hälften teilt und durch eine jeweilige Radialrichtung der Welle (26) und eine Axialrichtung (61) der Welle (26) aufgespannt wird.

14. Handbetätigte Presse gemäß einem der Ansprüche 9-13, wobei die Aufnahmenester (60) und Wälzkörper (50) in Umfangsrichtung der Welle (26) regelmäßig verteilt angeordnet sind.

15. Handbetätigte Presse gemäß einem der Ansprüche 1-14, ferner aufweisend ein Schiebergehäuse (14), in dem der Pressenstößel (24) längs geführt ist und/oder in dem die Welle (26) angeordnet ist, wobei das Betätigungsorgan (18) auf einer ersten Seite des Schiebergehäuses (14) angeordnet ist und die Hubfreigabeeinrichtung (42) auf einer zweiten Seite des Schiebergehäuses (14) angeordnet ist, welche der ersten Seite gegenüberliegt.
